# EUROPÄISCHE PATENTSCHRIFT

(11) **EP 1 271 811 B1**
(45) Veröffentlichungstag und Bekanntmachung des Hinweises auf die Patenterteilung: **22.12.2004**
(21) Anmeldenummer: 01440185.5
(22) Anmeldetag: 21.06.2001
(51) Int. Cl.: H04B 10/17, H01S 3/30

(54) **Verfahren und Vorrichtung zur Verstärkung von WDM Signalen mittels des stimulierten Brillouin-Streuprozess**
Method and device for amplifying WDM signals using stimulated Brillouin process
Méthode et dispositif d'amplification de signaux WDM utilisant le processus Brillouin stimulé

(43) Veröffentlichungstag der Anmeldung: 02.01.2003
(73) Patentinhaber: ALCATEL, 75008 Paris (FR)
(72) Erfinder: Veith, Gustav Dr., 75378 Bad Liebenzell (DE)
(74) Vertreter: Brose, Gerhard

(56) Entgegenhaltungen:
- EP-A- 0 863 630
- EP-A- 1 018 666
- WO-A-98/13957
- DE-A- 10 049 394
- CHRAPLYVY A R ET AL: "NARROWBAND TUNABLE OPTICAL FILTER FOR CHANNEL SELECTION IN DENSELY PACKED WEM SYSTEMS" ELECTRONICS LETTERS, IEE STEVENAGE, GB, Bd. 22, Nr. 20, 25. September 1986 (1986-09-25), Seiten 1084-1085, XP000471815 ISSN: 0013-5194
- OLSSON N A ET AL: "FIBRE BRILOUIN AMPLIFIER WITH ELECTRONICALLY CONTROLLED BANDWIDTH" ELECTRONICS LETTERS, IEE STEVENAGE, GB, Bd. 22, Nr. 9, 1. April 1986 (1986-04-01), Seiten 488-490, XP000709984 ISSN: 0013-5194

## Beschreibung

Die Erfindung betrifft ein Verfahren zur Verstärkung von WDM-Signalen in einem WDM-Übertragungssystem nach dem Oberbegriff des Anspruchs1, sowie einen optischen Verstärker nach dem Oberbegriff des Anspruchs 7 hierfür.

In modernen optischen Übertragungssystemen oder Netzwerken kommt heute vorwiegend das sogenannte Wellenlängenmultiplex-Verfahren (engl.: wavelength division multiplex, WDM) zum Einsatz, bei welchem eine Anzahl modulierter optischer Trägersignale, deren Frequenzen sich unterscheiden, im lichtwellenleiter gleichzeitig übertragen werden. Die gegenseitige optische Beeinflussung (Übersprechen) der einzelnen modulierten Träger ist dabei so gering, dass jeder der genannten Träger als unabhängiger Wellenlängen-Kanal oder WDM-Kanal betrachtet werden kann. Bei heutigen WDM-(Übertragungs-) Systemen mit sogenanntem dichten Wellenlängenmultiplex werden eine Vielzahl von Kanälen, beispielsweise 80 Kanäle, mit einem dichten Frequenzraster, beispielsweise mit einem äquidistanten Rasterabstand von beispielsweise 50 GHz, realisiert.

Ein Problem der WDM-Übertragung stellt die frequenzabhängige Dämpfung des übertragenen Lichts dar, wodurch verschiedene WDM-Signale eine unterschiedliche Dämpfung erfahren. Ebenso weisen optische Verstärker, beispielsweise mit Erbium dotierte Faserverstärker, die häufig als Zwischenverstärker auf einer langen Übertragungsstrecke eingesetzt werden, ein sogenanntes Verstärkungsspektrum auf; d.h. die WDM-Signale erfahren eine jeweils von ihrer Frequenz abhängige Verstärkung. Das Übertragungsspektrum ist dabei unter anderem von der Temperatur abhängig. Schließlich können auch unterschiedlich verlaufende Alterungsprozesse der optischen oder opto-elektrischen Elemente des WDM-Übertragungssystems, beispielsweise von Laserdioden, oder Defekte von optischen Verbindungen, zu signifikanten Intensitätsverlusten einzelner WDM-Signale führen.

Um ein Auseinanderdriften der Intensitäten der WDM-Signale zu vermeiden oder um Intensitätsunterschiede zu kompensieren, sind aus dem Stand der Technik verschiedene Lösungsansätze bekannt. So offenbart die Patentschrift US 6,049,414 mit dem Titel "Temperature-compensated rare earth doped optical waveguide amplifiers" ein System und ein Verfahren, um den Einfluss der Temperatur auf das Verstärkungsspektrum eines Faserverstärkers mittels steuerbarer temperaturabhängiger optischer Filter zu kompensieren. Bei einem weiteren, in der Patentschrift US 6,151,160 offenbarten, Verfahren wird die Gesamtheit der WDM-Signale zunächst breitbandig verstärkt und anschließend frequenzabhängig auf verschiedene optische Zweige aufgeteilt. Dort werden jeweils die entsprechende Teilmengen der WDM-Signale individuell verstärkt und anschließend wieder optisch zusammengeführt.

EP 1018666 offenbart ein Verfahren, bei welchem eine Verstärkung von WDM-Signalen mittels des sogenannten Raman Effekts erfolgt. Die Raman-Verstärkung stellt gegenüber den WDM-Signalen einen relativ breitbandigen Effekt dar, welcher jedoch nicht unabhängig von der Wellenlänge ist. Zur Herstellung einer möglichst flachen Verstärkungskurve wird eine Anordnung mit verschiedenen Pumplichtquellen offenbart, welche zu einem Pumplicht kombiniert werden. Durch eine opto-elektrische Umwandlung eines kleinen Teils der zu verstärkenden WDM-Signale und einer Messung der einzelnen Intensitäten der WDM-Signale werden dann optimale Steuersignale für diese Pumplichtquellen ermittelt.

Diese Verfahren zur Intensitätsangleichung von WDM-Signalen haben jedoch verschiedene Nachteile. Der Nachteil der Kompensation mittels steuerbarer Filter liegt darin, dass gegebenenfalls hohe Dämpfungsverluste in Kauf genommen werden müssen. So müssen zur Angleichung der Intensitäten bis auf den WDM-Kanal mit der geringsten Intensität die Intensitäten der übrigen Kanäle auf diese geringste Intensität herabgesetzt werden. Der Nachteil der Kompensation mittels Aufteilung auf verschiedene optische Zweige besteht einerseits im hohen schaltungstechnischen Aufwand und andererseits in Intensitätsverlusten durch die Aufspaltung des Lichtes. Die Raman-Verstärkung hat den Nachteil, dass sie auf Grund des breitbandigen Effekts keine Verstärkung individueller WDM-Signale gestattet. Die bekannten Verfahren sind insbesondere dann wenig geeignet, wenn einzelne WDM-Signale, beispielsweise durch Alterung entsprechender Komponenten, eine gegenüber den anderen Kanälen signifikant geringere Intensität aufweisen.

In der Zeitschrift "Electronic Letters, Stevenage, Vol. 22, (25 September 1986) No 20, Herts, GB" wird in einem Artikel mit der Überschrift "Narrowband tuneable optical filter for channel selection in densely packed WDM systems (Seiten 1084-1085)" ein Verfahren zur Verstärkung ausgewählter optischer Wellenlängenmultiplex (WDM)-Signale offenbart, in dem ein Pumplicht entgegen der Übertragungsrichtung der WDM-Signale in einen Lichtwellenleiter eingekoppelt wird. Zur Erhöhung der Bandbreite des schmalbandigen Pumplichts an das ausgewählte WDM-Signal wird vorgeschlagen, entweder die Germanium-Konzentration im Kern des Lichtwellenleiters zu erhöhen oder die Pumplichtfrequenz mit der Zeit zu variieren (dithering the pump laser frequency).

Aufgabe der Erfindung ist es, ein Verfahren und Einrichtungen zur Durchführung dieses Verfahrens mit einer alternativen Anpassung der Bandbreite des Pumplichts and das ausgewählte WDM-Signal zu schaffen.

Diese Aufgabe wird erfindungsgemäß gelöst durch ein Verfahren nach der Lehre des Anspruchs 1 und einen optischen Verstärker nach der Lehre des Anspruchs 7.

Die stimulierte Brillouin-Streuung (engl.: stimulated Brillouin Scattering, SBS) ist ein Schallwellenstreuprozess, der auftritt, wenn kohärente elektromagnetische Wellen, ein sogenanntes Pumplicht, hoher Intensität in einen Lichtwellenleiter eingestrahlt wird. Die Brillouin-Streuung ist ein nichtlinearer Effekt der mit zunehmender Intensität überproportional zunimmt. Durch Wechselwirkung mit dem optischen Medium entstehen akustische Wellen, die ein mit einer bestimmten Geschwindigkeit in gleicher Richtung mit dem Pumplicht im Lichtwellenleiter sich fortbewegendes Beugungsgitter hervorrufen. Dadurch wird dieses Pumplicht gestreut, wobei der größte Streuanteil durch einen in entgegengesetzte Richtung zum Pumplicht rückgestreuten Anteil des Pumplichts gebildet wird. Durch den Dopplereffekt wird die Frequenz dieser rückgestreuten Welle um die Schallfrequenz der akustischen Welle reduziert. Diese sogenannte Brillouin-Frequenz ist eine für das jeweilige Fasermaterial charakteristische Größe.

Wenn nun ein Signal in umgekehrter Richtung zum Pumplicht und gleicher Wellenlänge wie das rückgestreute Pumplicht in den Wellenleiter eingespeist wird, so wird das oben erwähnte akustische Beugungsgitter signifikant verstärkt. Dies führt zu einer Intensitätserhöhung des rückgestreuten Pumplichts und damit zur Verstärkung des eingespeisten Signals. Diese Zusammenhänge sind aus dem Stand der Technik bekannt.

Nun wird dieser Effekt, bei dem Pumplichtenergie in ein Signallicht transferiert wird, gemäß der Erfindung zur Verstärkung ausgewählter WDM-Signale nutzbar gemacht, indem Pumplicht mit einem bestimmten Frequenzspektrum entgegen der Übertragungsrichtung der WDM-Signale in den Lichtwellenleiter eingespeist wird. Das Frequenzspektrum eines Pumplichts zur verzerrungsfreien Verstärkung eines ausgewählten WDM-Signals ist dabei gegenüber dem Frequenzspektrum dieses WDM-Signals um die oben genannte Brillouin-Frequenz verschoben. Da die Brillouin-Streuung ein schmalbandiger Effekt ist, findet eine Anpassung des Pumplichts an die Bandbreite der WDM-Signaledadurch statt, dass das Pumplichts mit einem digitalen Pseudozufallssignal moduliert wird, welches gegenüber einem zu verstärkenden WDM-Signal die gleiche Modulationsart und Modulationsgeschwindigkeit aufweist.

Die Verstärkung des gesamten Spektrums einzelner WDM-Signalekann gezielt vorgenommen und dabei eine Beeinflussung anderer WDM-Kanäle praktisch ausgeschlossen werden. Die Verstärkungsregelung kann empfangsseitig vorgenommen werden, d.h. eine Empfangseinrichtung, beispielsweise zur Verarbeitung oder Umsetzung der WDM-Signale, kann die Intensität eines oder mehrerer WDM-Signale genau so einstellen, dass die Fehlerrate beim Auslesen der entsprechenden Daten minimiert wird.

Weitere Ausgestaltungen der Erfindung sind den abhängigen Ansprüchen und der nachfolgenden Beschreibung zu entnehmen.

Im folgenden wird die Erfindung unter Zuhilfenahme der beiliegenden Zeichnungen weiter erläutert:
- Fig.1: zeigt schematisch eine Anordnung mit einem erfindungsgemäßen optischen Verstärker zur Verstärkung eines ausgewählten WDM-Signals,
- Fig.2: zeigt schematisch eine Anordnung mit einem erfindungsgemäßen Verstärker zur gleichzeitigen individuellen Verstärkung mehrerer WDM-Signale,
- Fig.3 Fig.4a: zeigt eine Skizze zur Frequenzanpassung eines Pumpsignals, zeigt schematisch das Spektrum eines Pumpsignals zur vollständigen Verstärkung eines WDM-Signals,
- Fig.4b: zeigt schematisch das Spektrum eines Pumpsignals zur partiellen Verstärkung eines WDM-Signals,
- Fig.5: zeigt schematisch einen erfindungsgemäßen Verstärker als Teil eines erfindungsgemäßen optischen Verstärkersystems und
- Fig.6: zeigt schematisch und beispielhaft ein Diagramm mit Verstärkungskurven und Pumpwellenlängen des erfindungsgemäßen optischen Verstärkersystems.

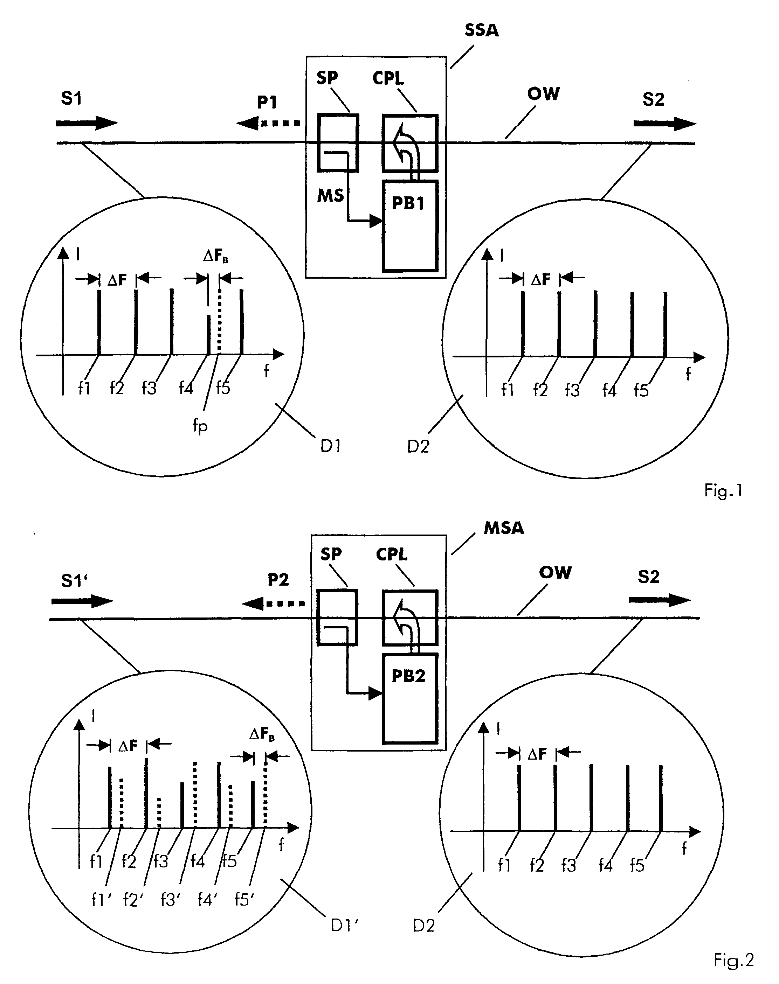

Fig.1 zeigt einen (optischen) Wellenleiter OW, der über einen (optischen) Verstärker SSA führt. Der Verstärker SSA besteht aus einem (optischen) Splitter SP, einer gesteuerten (singulären) Pumplichtquelle PB1 und einem optischen Koppler CPL. In den Wellenleiter OW wird eingangsseitig zum Verstärker SSA ein (optisches) Eingangssignal S1 eingespeist, bestehend aus einer Vielzahl von WDM-Signalen mit unterschiedlichen Trägerfrequenzen, von welchem mittels des Splitters SP ein Messsignal MS abgegriffen wird und der Pumplichtquelle PB1 zugeführt wird. Diese Pumplichtquelle erzeugt ein Pumplicht P1, welches über den Koppler CPL entgegen der Richtung des Eingangssignals S1 zur Verstärkung in den Wellenleiter OW eingespeist wird. Ein verstärktes optisches Signal oder Ausgangssignal S2 führt aus dem Verstärker SSA heraus. Ein erstes Diagram D1 zeigt schematisch den Intensitätsverlauf I (Ordinate) des Eingangssignals S1 (durchgezogen) und des Pumplichts P1 (gestrichelt) über der Frequenz f (Abzisse). Dabei sind für das Eingangssignal S1 beispielhaft fünf benachbarte WDM-Signale mit ihren Trägerfrequenzen f1 - f5 schematisch eingezeichnet. Die Trägerfrequenzen f1 - f5 dieser WDM-Signale weisen jeweils einen äquidistanten Frequenzabstand ΔF auf. Weiter ist das Frequenzspektrum des ersten Pumplicht P1 beispielhaft mit einer singulären schmalbandigen Frequenzspitze mit einer Mittenfrequenz fp' eingezeichnet. Die Mittenfrequenz fp des Pumplichts P1 ist dabei um die Brillouin-Frequenz ΔFB höher als die Trägerfrequenz f4 eines beispielhaft ausgewählten zu verstärkenden WDM-Signals. Beispielhaft weisen alle WDM-Signale bis auf das WDM-Signal mit der Trägerfrequenz f4, dessen Intensität gegenüber den anderen WDM-Signalen reduziert ist, jeweils die selbe Intensität auf. Ein zweites Diagram D2 zeigt schematisch den Intensitätsverlauf I des Ausgangssignals S2, d.h. des verstärkten Eingangssignals S1 über der Frequenz f. Alle WDM-Signale weisen hier die selben Intensität auf.

Es wird hier von einem WDM-System mit äquidistanten Frequenzabständen ΔF der Trägerfrequenzen der WDM-Kanäle, d.h. von einem äquidistanten Frequenzraster ausgegangen. So beträgt der Rasterabstand bei heutigen Systemen häufig 100 Gigaherz bei insgesamt 40 WDM-Kanälen. Neueste WDM-Systeme weisen bereits einen Rasterabstand von nur 50 Gigaherz bei 80 Kanälen auf. Die Erfindung ist jedoch nicht auf WDM-Systeme mit äquidistanten Rasterabstand beschränkt. So kann die Erfindung beispielsweise auch bei Systemen mit alternierenden Frequenzabständen angewandt werden, die beispielsweise bei einer sogenannten Einseitenband-Filterung (engl.: vestigial side band filtering, VSB) zur Optimierung der Übertragungskapazität angewandt wird.

Der Splitter SP entnimmt einen geringen Teil der Intensität des am Verstärker SSA ankommenden Signals und führt diesen Signalteil als Messsignal MS der Pumplichtquelle PB1 zu. Der Verstärker SSA weist eine Pumplichtquelle zur Erzeugung eines Pumplichts mit einer singulären schmalbandigen Frequenzspitze auf, welches beispielsweise von einer Laserdiode erzeugt wird. Dieser Verstärker SSA, hier auch Single Source Verstärker SSA genannt dient der Verstärkung genau eines ausgewählten WDM-Signals. Dazu wird mittels eines hier nicht eingezeichneten opto-elektrischen Wandlers das Messsignal MS in ein elektrisches Signal umgewandelt und ermittelt, beispielsweise mittels einer hier nicht gezeigten elektronischen Auswerteeinrichtung, welches der WDM-Signale verstärkt werden soll und welche Pumpleistung erforderlich ist. Als zu verstärkendes WDM-Signal wird beispielsweise das WDM-Signal mit der geringsten Intensität ausgewählt. In dem hier gezeigten Beispiel wird ein Intensitätsdefizit für das WDM-Signal mit der vierten Trägerfrequenz f4 ermittelt. Die Auswerteeinheit sendet der Pumplichtquelle PB1 ein Steuersignal zur Erzeugung eines Pumplichts P1 bestimmter Intensität mit einer um die Brillouin-Frequenz ΔFB höheren Mittenfrequenz fp gegenüber der Trägerfrequenz f4 des zu verstärkenden WDM-Signals.

Die Einstellung der Intensität des Pumplichts P1 erfolgt, wie beschrieben in einem geschlossenen Regelkreis. Damit keine Schwingungen der Pumplichtintensität entstehen, wird die Intensitätsmessung wird über einen gegenüber der Datenrate der WDM-Signale wesentlich größeren Zeitbereich gemittelt. Dadurch wird insbesondere erreicht, dass kurzfristige durch die Modulation bedingte Intensitätsschwankungen unberücksichtigt bleiben. Das Pumplicht P1 wird über den Koppler CPL entgegen der Signallaufrichtung des Eingangssignals S1 in den Wellenleiter OW eingespeist. Damit über den Koppler CPL keine oder nur geringe Signalenergie des Nutzsignals ausgekoppelt wird, d.h. keine Signalenergie verloren geht, kann der Koppler CPL als wellenselektiver Koppler realisiert werden. Alternativ dazu kann der Koppler CPL dazu als optischer Zirkulator realisiert so realisiert werden.

Wie oben beschrieben, bewirkt das Pumplicht P1 eine Verstärkung genau desjenigen Signals, dessen Frequenz um die Brillouin-Frequenz ΔFB niedriger als die Frequenz des Pumpsignals ist. Diese Brillouin-Frequenz ΔFB ist eine charakteristische Größe und beträgt für Signale im Wellenlängenbereich von 1550 Nanometern in Quarzglas etwa 11.1 Gigahertz. Die Verstärkung durch eine stimulierte Brillouin-Streuung stellt eine schmalbandigen Prozess dar, bei welchem ein Frequenzbereich von lediglich etwa 16 Megaherz des zu verstärkenden Signals von der Verstärkung erfasst werden.

Für einen vorteilhaften Einsatz eines oben beschriebenen Verstärkers ist es wichtig, dass jedes WDM-Signal aus der Vielzahl der WDM-Signale verstärkt werden kann. Dazu wird als Pumplichtquelle PB1 ein einstellbarer Pumplaser (engl.: tunable Pump laser) verwendet. Dieser einstellbare Pumplaser kann dabei innerhalb des Frequenzbereichs der WDM-Signale oder des WDM-Signalbands oder eines Teils des WDM-Signalsbands auf jede gewünschte Frequenz zur Verstärkung eines ausgewählten WDM-Signals eingestellt werden. Das WDM-Signalband umfasst beispielsweise das sogenannte C-Band mit einem Wellenlängenbereich von 1530-1565 Nanometern und/oder das sogenannte L-Band mit einem Wellenlängenbereich von 1570-1610 Nanometern.

In einer alternativen Ausführung wird das Pumplicht S1 durch Frequenzumwandlung aus dem zu verstärkendem WDM-Signal gewonnen, indem mittels einer geeigneten optischen Schaltung aus dem ausgewählten WDM-Signal ein Signal mit einer um die Brillouin-Frequenz ΔFB erhöhten Frequenz erzeugt wird und als Pumplicht S1 in den Wellenleiter OW zurückgeführt wird.

Die bisher beschriebenen Ausführungen erlauben nur die Verstärkung eines ausgewählten WDM-Signals. Ein derartiger Verstärker eignet sich insbesondere dann, wenn beispielsweise aufgrund von Bauteilefehlern, optischen Kopplungsfehlern oder vorzeitiger Alterung bestimmter Bauteile ein einzelner WDM-Kanal eines WDM-Systems degradiert. Wenn allerdings mehrere WDM-Kanäle gleichzeitig degradieren, d.h. mehrere ausgewählte WDM-Signale gleichzeitig verstärkt werden müssen, muss ein entsprechendes Pumplichtsignal mit mehreren Frequenzen erzeugt werden. Ausführungsformen dazu werden unter der Beschreibung der folgenden Fig.2 beschrieben.

Fig. 2 zeigt eine ähnliche Anordnung wie Fig.1, bei welcher der Verstärker SSA durch einen hier als Mehrfachverstärker oder Multi Source Verstärker MSA bezeichneten optischen Verstärker ersetzt ist. Der Mehrfachverstärker MSA weist anders als der (Single Source) Verstärker SSA eine Mehrfach-Pumplichtquelle PB2 auf. In den Wellenleiter OW wird eingangsseitig ein modifiziertes Eingangssignal S1' eingespeist, bei welchem die Intensitäten der WDM-Signale unterschiedliche Werte aufweisen. Statt des Pumplichts P1 mit einer ausgeprägten Frequenzspitze wird hier ein erweitertes Pumplicht P2 mit mehreren schmalbandigen Frequenzspitzen entsprechend der Anzahl der zu verstärkenden WDM-Signale erzeugt. Das Ausgangssignal S2 weist wie unter Fig.1 identische Intensitätswerte für alle WDM-Signale auf. Ein erstes modifiziertes Diagram D1' zeigt schematisch den Intensitätsverlauf I des modifizierten Eingangssignals S1' und des erweiterten Pumplichts P2 über der Frequenz f. Dabei sind für das modifizierte Eingangssignal S1' wiederum beispielhaft und schematisch fünf WDM-Signale mit ihren Frequenzspitzen als durchgezogene Linien eingezeichnet. Die Trägerfrequenzen f1 - f5 dieser WDM-Signale weisen jeweils wieder einen äquidistanten Frequenzabstand ΔF auf; jedoch unterscheiden sich die Intensitätswerte gegeneinander. Weiter ist das Frequenzspektrum des erweiterten Pumplichts P2 mit Frequenzspitzen mit den Mittenfrequenzen f1' - f5' als gestrichelte Linien eingezeichnet. Die Mittenfrequenzen f1' - f5' sind dabei jeweils gegenüber den Trägerfrequenzen f1 - f5 um die Brillouin-Frequenz ΔFB höher.

In dem hier gezeigten Beispiel werden alle WDM-Signale verstärkt. Dabei wird jedes WDM-Signal entsprechend seiner im Verstärker MSA ermittelten Intensität unterschiedlich verstärkt. Das erweiterte Pumplicht P2 weist also ein Linienspektrum mit unterschiedlichen Intensitäten für jede Linie auf. Das erweiterte Pumplicht wird dabei beispielsweise von einer Anzahl von Laserdioden erzeugt, die auf verschiedene festgelegte Frequenzwerte fixiert sind. Alternativ dazu wird das erweiterte Pumplicht S2 entsprechend der unter Fig.1 beschriebene Ausführung durch Frequenzumwandlung aus den zu verstärkenden WDM-Signalen gewonnen.

In einer weiteren Variante werden wiederum mehrere Pumplichtquellen, beispielsweise Laserdioden, zur Erzeugung eines Pumplichts verwendet. Allerdings ist die Anzahl dieser Pumplichtquellen geringer als die Anzahl der WDM-Kanäle des WDM-Systems. Die Pumplichtquellen sind dabei teilweise oder sämtlich in ihrer Frequenz einstellbar. Mit einem solchen Verstärker lassen sich mehrere WDM-Signale gleichzeitig verstärken, ohne dass für jeden WDM-Kanal eine eigene Pumplichtquelle vorgesehen werden muss. Dies stellt insbesondere für WDM-Systeme mit einer Vielzahl von WDM-Kanälen, beispielsweise 80 Kanälen bei heute bereits realisierten WDM-Systemen, einen sinnvollen Kompromiss dar, insbesondere solange dieser Verstärker in erster Linie zur Kompensation von Intensitätsverlusten verwendet wird, welche durch Bauteilefehler oder Kopplungsfehler verursacht werden. Derartige Fehler wirken sich, wie beschrieben, häufig auf einzelne WDM-Kanäle aus und führen häufig zu einer deutlichen Reduzierung der Intensität der betroffenen WDM-Signale, die sich mit herkömmlichen Verstärkern nicht befriedigend kompensieren lassen. Die Degradierung einzelner Kanäle kann empfangsseitig korrigiert werden, ohne die anderen Kanäle zu beeinflussen. Damit kein ein Abschalten des Systems vermieden werden.

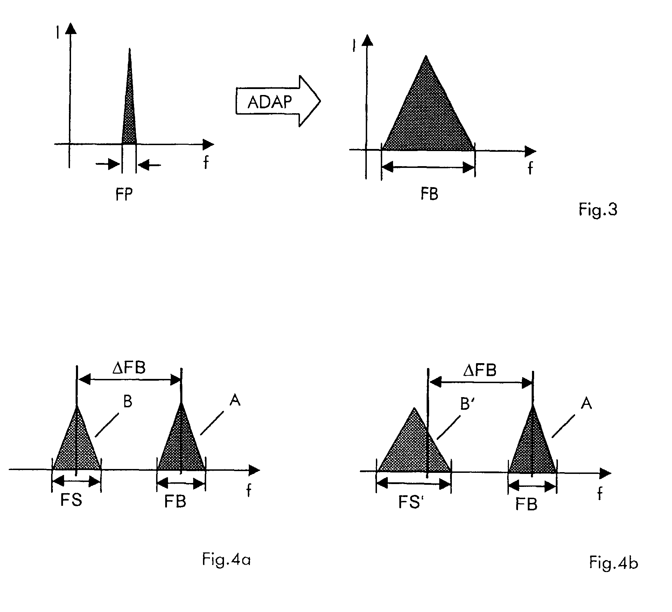

Mit zunehmender Modulationsfrequenz, d.h. mit zunehmender Bitrate der in einem WDM-Signal enthaltenen Information nimmt die Breite des entsprechenden Frequenzspektrums zu. Bisher wurde hier vereinfachend von linienhaften Spektren, d.h. von schmalbandigen WDM-Signalen ausgegangen. Diese Sichtweise kann angenommen werden, solange die Modulationsfrequenz eines WDM-Signals gering ist, insbesondere wesentlich geringer als der Frequenzabstand ΔF der Trägerfrequenzen zueinander ist. Bei heutigen Systemen mit hohen Bitraten, beispielsweise bis zu 20 Giga-Herz pro WDM-Kanal kann allerdings nicht mehr von linienhaften Spektrum ausgegangen werden. Wie oben beschrieben, stellt eine stimulierte Brillouin-Streuung einen schmalbandigen Prozess dar, bei welchem nur ein sehr enger Frequenzbereich um die Pumplichtfrequenz herum erfasst werden. Da das Spektrum eines beispielsweise durch eine Laserdiode erzeugten Pumplichts nur einen sehr schmalen Frequenzbereich aufweist, würde also nur ein sehr geringer Teil eines breitbandigen WDM-Signals von einer Verstärkung durch den Brillouin-Effekt erfasst. Eine derart schmalbandige Verstärkung eines breitbandigen Signals würde zu einer Verzerrung des verstärkten Signals führen, wodurch eine fehlerlose Demodulierung, d.h. Rückgewinnung des Informationssignals erschwert würde. Außerdem hätte eine solche Verstärkung nur einen sehr begrenzten Wirkungsgrad. Eine Lösung dieses Problems wird unter der folgenden Fig.3 beschrieben.

Fig.3 zeigt im linken Diagramm links den Verlauf der Intensität I eines schmalbandigen Pumplichts über der Frequenz f. Das Spektrum dieses Pumplichts ist durch ein schmales Dreieck mit einer Fußbreite oder Linienbreite FP schematisch dargestellt. Im rechten Diagramm ist der Verlauf der Intensität I eines angepassten Pumplichts über der Frequenz f dargestellt. Dieses, ebenfalls als Dreieck dargestellte Signal weist die angepasste Fußbreite oder angepasste Pumplichtbreite FB auf. Der Pfeil ADAP symbolisiert einen Modifikationsprozess zu einer Anpassung eines schmalbandigen Pumplichts an die Signalbandbreite eines zu verstärkenden WDM-Signals.

Zur Erzeugung eines Pumplichts werden bevorzugt (Halbleiter-) Laserdioden verwendet. Diese Laserdioden emittieren schmalbandiges Licht, beispielsweise mit einer Linienbreite FP von etwa 10 Megaherz. Die Signalbrandbreite eines WDM-Signals umfasst bei modernsten WDM-Systemen eine großen Teil des reservierten Frequenzbereichs, beispielsweise 20 Gigabit in einem WDM-System mit einem Frequenzraster mit 100 Gigabit. Zur optimalen Verstärkung eines WDM-Signals muss die Linienbreite FP des schmalbandigen Pumplichts an die Signalbandbreite angepasst werden. In einer ersten Ausführung wird das Pumplicht dazu gepulst, d.h. jeweils in wiederholten Zeitabständen eingeschaltet und ausgeschaltet. Dadurch wird erreicht, dass das gepulste Pumplicht in einem größeren spektralen Bereich emittiert. Die Schaltzeiten werden so bestimmt, dass das gepulste Pumplicht die gesamte Bandbreite FB des zu verstärkenden WDM-Signals abdeckt. In einer vorteilhaften Alternative wird das schmalbandige Pumplicht mit einem sogenannten digitalen Pseudozufallssignal (engl.: Pseudo Random Binary Signal, PRBS) moduliert. Dieses Zufallssignal weist gegenüber dem zu verstärkenden WDM-Signal die gleiche Schrittfrequenz oder und die gleiche Signalform aus, d.h. die Modulationsart und die Modulationsgeschwindigkeit sind identisch. Dadurch wird die Bandbreite FB des modulierten Pumplichts optimal an die Bandbreite zu verstärkenden WDM-Signals angepasst.

Zur Verdeutlichung dazu zeigt Fig.4a die Spektren am Beispiels eines ausgewählten WDM-Signals und des angepassten Pumplichts, jeweils durch Dreiecke B und A mit der Fußbreite, d.h. Signalbreite FS bzw. Pumplichtbandbreite FB symbolisiert. Zur optimalen Verstärkung des WDM-Signals sind beide Bandbreiten FS und FB identisch. Die Trägerfrequenz des Pumplichts ist dabei um die Brillouin-Frequenz ΔFB höher als die Trägerfrequenz des WDM-Signals.

Fig.4b entspricht Fig.4a, jedoch ist hier die Bandbreite des WDM-Signals, symbolisiert durch ein Dreieck B' mit einer Signalbreite FS', größer als die Pumplichtbreite FB. Da das Spektrum eines modulierten Trägers symmetrisch ist, genügt prinzipiell die Information eines Seitenbandes zur vollständigen Rückgewinnung des Informationssignals. Dazu wird von einem Sender jeweils ein Seitenband der WDM-Signale unterdrückt und die WDM-Signale entsprechend dichter gruppiert. Zur Anpassung eines schmalbandigen Pumplichts an ein solches WDM-Signal wird dafür eine Modulationsgeschwindigkeit gewählt, die gegenüber der Modulationsgeschwindigkeit des WDM-Signals geringer ist, beispielsweise halb so groß. Entsprechend ist die Frequenzdifferenz zwischen Trägerfrequenz des Pumplichts und der Trägerfrequenz des WDM-Signals von der Brillouin-Frequenz verschieden. Damit wird dann ausschließlich oder im wesentlichen nur das gewünschte Seitenband verstärkt.

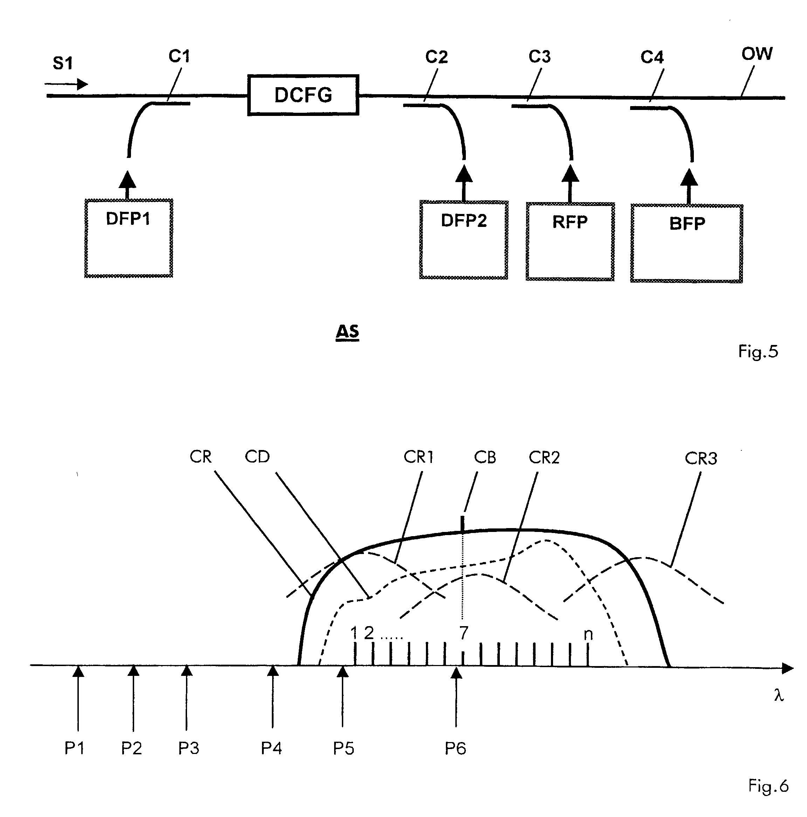

Fig.5 zeigt schematisch eine weitere vorteilhafte Ausführung eines der oben genannten Verstärker mit stimulierter Brillouin-Streuung zur Verstärkung ausgewählter WDM-Signale, im folgenden kurz Brillouin-Verstärker genannt, als Teil eines optischen Breitbandverstärkersystems AS, welches gleichzeitig der Verstärkung, der Dispersionskompensation und der kontrollierten Angleichung der Verstärkung (engl.: gain equalisation) von WDM-Signalen dient. Dazu ist ein Wellenleiter OW mit einem aktiven Faserelement DCFG eingezeichnet. Die Signallaufrichtung eines Eingangssignals S1, welches wie in Fig.1 beschrieben aus verschiedenen WDM-Signalen eines WDM-Systems besteht, führt von links nach rechts. Links des aktiven Faserelements DCFG wird beispielhaft mittels eines ersten Kopplers C1 Pumplicht einer ersten Faserverstärker-Pumplichtquelle DFP1 in Signallaufrichtung eingespeist. Rechts des aktiven Faserelements DCFG wird gegen die Signallaufrichtung beispielhaft nacheinander Pumplicht einer zweiten Faserverstärker-Pumplichtquelle DFP2, einer Ramanverstärker-Pumplichtquelle RFP und einer Brillouinverstärker-Pumplichtquelle BFP jeweils über die Koppler C2, C3 und C4 eingespeist.

Das Pumplicht der genannten Pumplichtquellen bewirkt jeweils einen bestimmten Verstärkungseffekt im aktiven Faserelement DCFP. Das Pumplicht der Faserverstärker-Pumplichtquellen DFP1 und DFP2 und das Pumplicht der Ramanverstärker-Pumplichtquellen RFP bewirkt jeweils eine globale Verstärkung aller WDM-Signale oder einer Teilmenge dieser WDM-Signale des Eingangssignals S1. Gleichzeitig wird im aktiven Faserelement eine Kompensation der Dispersion, hervorgerufen durch die Übertragung über lange Strecken, bewirkt. Das Pumplicht der Brillouinverstärker-Pumplichtquelle BFP erlaubt, wie vorangehend beschrieben, die Angleichung der Intensitäten individueller WDM-Signale, die sich insbesondere bei signifikanter Degradation, d.h. bei signifikanten Intensitätsverlust eines individuellen WDM-Signals, nicht mehr zufriedenstellend mittels der anderen Verstärker kompensieren lässt.

Das aktive Faserelement DCFP besteht aus einer Faserspule, welche in einer ersten Variante aus drei optisch hintereinandergeschalteten Faserstücken besteht. Ein erstes Faserstück stellt eine Faser mit einem beispielsweise mit Erbium-dotierten Faserkern dar. Dieses Faserstück stellt zusammen mit den Faserverstärker-Pumplichtquellen DFP1 und DFP2 einen sogenannten dotierten Faserverstärker (engl. doped fiber amplifier) dar. Ein zweites Faserstück besteht aus einer undotierten Verstärkungsfaser, welche zusammen mit den Ramanverstärker-Pumplichtquelle RFP einen sogenannten Ramanverstärker darstellt. Die Ramanverstärkung stellt einen nichtlinearen Effekt dar; die Verstärkung steigt quadratisch mit der Intensitätsdichte des Pumplichts an. Daher wird für dieses Faserteil zur Erreichung einer hohen Intensitätsdichte bei gegebener Intensität der Pumplichtquelle ein möglichst geringe Querschnittsfläche für den Faserkern gewählt, d.h. eine dünnkernige Faser eingesetzt. Ein drittes Faserstück besteht aus einer Faser mit inversem Dispersionsverhalten zur Dispersionskompensation der Übertragungsfaser.

In einer vorteilhaften Variante werden die oben beschriebenen Wirkungen kombiniert, d.h. zwei oder drei der beschriebenen Wirkungen mittels einem physikalischen Faserstück realisiert. So kann beispielsweise das Faserstück zur Ramanverstärkung und des Faserstück zur Dispersionskompensation aus einem physikalischen Faserstück bestehen, welches einen dünnen Kern aufweist und ein inversives Dispersionsverhalten zeigt. Es können auch alle drei Wirkungen in einem physikalischen Faserstück hervorgerufen werden, wobei das im letzten Satz beschriebene Faserstück dann zusätzlich entsprechend mit einem verstärkungsaktivem Material dotiert ist.

Fig.6 zeigt beispielhaft ein Diagramm mit den Spektren oder Verstärkungskurven der einzelnen Verstärker oder Verstärkungseffekte des erfindungsgemäßen optischen Verstärkersystems AS und die Wellenlängen des von den entsprechenden Pumplichtquellen DFP1, DFP2, RFP und BFP Pumplichts zu Fig.5. Dazu sind auf einer Wellenlängenachse λ schematisch eine Anzahl von n WDM Signalen 1-n eingezeichnet. Das siebte WDM-Signal 7 ist hier beispielhaft degradiert. Von links nach rechts ist eine Faserverstärkungskurve CD eines dotierten Faserverstärkers, eine erste Ramanverstärkungskurve CR1, eine Brillouinverstärkungskurve CB, eine zweite Ramanverstärkungskurve CR2 und eine dritte Ramanverstärkungskurve CR3 eingezeichnet. Eine resultierende Verstärkungskurve CR stellt die resultierende, d.h. additive Wirkung sämtlicher Verstärkungseffekte im aktiven Faserelement DCFG dar.

Unterhalb der Wellenlängenachse λ sind beispielhaft von links nach rechts die Wellenlängen für die Pumplichter P1- P6 der Pumplichtquellen DFP1, DFP2, RFP und BFP aus Fig.5 eingezeichnet. Dabei liegen die Wellenlängen der Pumplichter P1- P4 außerhalb (out of band) und die Wellenlängen der Pumplichter 5- 6 innerhalb (in band) des Spektrums der resultierenden Verstärkungskurve CR. Das erste Pumplicht P1 wird dabei von der ersten Faserverstärker-Pumplichtquelle DFP1, das zweite Pumplicht P2 von der zweiten Faserverstärker-Pumplichtquelle DFP2, das dritte, vierte und fünfte Pumplicht P3- P5 von den Ramanverstärker-Pumplichtquellen RFP und das sechste Pumplicht P6 von der Brillouinverstärker-Pumplichtquelle BFP erzeugt.

Die Faserverstärkungskurve CD erfasst alle WDM-Signale, bewirkt jedoch abhängig von der Wellenlänge eine unterschiedliche Verstärkung. Die Ramanverstärkungskurven CR1- CR3, hervorgerufen durch die Pumplichtquellen P3- P5, erfassen jeweils einen Teil der WDM-Signale und die Brillouinverstärkungskurve CB, hier als schmalbandige Spitze dargestellt, erfasst das beispielhaft ausgewählte siebte WDM-Signal. Die Mittenfrequenz dieser Verstärkungskurve CB ist dabei um die oben beschriebene Brillouin-Frequenz ΔFB gegenüber der Trägerfrequenz des siebten WDM-Signals verschoben. Die resultierende Verstärkungskurve CR ist, bis auf eine Spitze an der durch den Brillouinverstärker hervorgerufenen Verstärkungseffekt CB, im Bereich der WDM-Signale 1-n, wie gewünscht, näherungsweise flach, d.h. das gesamte Breitbandverstärkungssystem AS erreicht eine Verstärkung, Angleichung und Dispersionskompensation aller WDM-Signale.

## Patentansprüche

1. Verfahren zur Verstärkung von optischen Wellenlängenmultiplex WDM-Signalen (S1, S1') in einem WDM-Übertragungssystem, wobei Pumplicht (P1, P2) entgegen der Übertragungsrichtung der WDM-Signale (S1, S1') in einen Lichtwellenleiter (OW) des optischen Übertragungssystems eingekoppelt wird, wobei das Pumplicht (P1, P2) ein Frequenzspektrum derart aufweist, dass mindestens ein ausgewähltes WDM-Signal durch einen durch das Pumplicht hervorgerufenen stimulierten Brillouin-Streuprozess im Lichtwellenleiter (OW) unabhängig von mindestens einem nicht ausgewählten WDM-Signal individuell verstärkt wird, wobei dass das Pumplicht (P1, P2) mittels einer schmalbandigen Pumplichtquelle (PB1, PB2) erzeugt wird und mittels eines Anpassungsprozesses (ADAP) an die Bandbreite (FS) des zu verstärkenden WDM-Signals (S1, S1') angepasst wird, **dadurch gekennzeichnet, dass** diese Anpassung (ADAP) darin besteht, dass das Pumplicht (P1, P2) mit einem digitalen Pseudozufallssignal moduliert wird, welches gegenüber einem zu verstärkenden WDM-Signal die gleiche Modulationsart und Modulationsgeschwindigkeit aufweist.

2. Verfahren nach Anspruch 1, **dadurch gekennzeichnet, dass** zur Angleichung unterschiedlicher Intensitäten der WDM-Signale (S1') die Intensität der WDM-Signale gemessen wird und ein entsprechendes Pumplicht (P2) zur gezielten individuellen Verstärkung der WDM-Signale bestimmt wird.

3. Verfahren nach Anspruch 2, **dadurch gekennzeichnet, dass** zur Ermittlung der Verstärkung eine lntensitätsmessung des zu verstärkenden Signals über einen gegenüber der Datenrate der WDM-Signale wesentlich größeren Zeitbereich gemittelt wird, wodurch die durch die Modulation bedingte Intensitätsschwankungen unberücksichtigt bleiben.

4. Verfahren nach Anspruch 1, **dadurch gekennzeichnet, dass** das die Einkoppelung des Pumplichts (P1) über einen wellenlängenselektiven Koppler (CPL) erfolgt.

5. Verfahren nach Anspruch 1, **dadurch gekennzeichnet, dass** als Pumplichtquelle (PB1, PB2) ein einstellbarer Pumplaser verwendet wird, welcher innerhalb des Frequenzbereichs des WDM-Signalbands oder eines Teils des WDM-Signalbands auf jede gewünschte Frequenz zur Verstärkung eines ausgewählten WDM-Signals eingestellt wird.

6. Verfahren nach Anspruch 1, **dadurch gekennzeichnet, dass** das Pumplicht (P1,P2) durch Frequenzumwandlung aus dem zu verstärkendem WDM-Signal gewonnen, und in den Wellenleiter (OW) mit einer um die Brillouin-Frequenz (ΔFB) erhöhten Frequenz eingekoppelt wird.

7. Optischer Verstärker (SSA, MSA) für ein Wellenlängenmultiplex-Übertragungssystem, mit:
• Einspeisemitteln (CPL) zum Einspeisung eines Pumplichts (P1, P2) in den Lichtwellenleiter (OW) entgegen der Übertragungsrichtung der WDM-Signale (S1, S1') und
• Pumplichterzeugungsmitteln (PB1, PB2), die derart ausgebildet sind, dass ein Pumplicht (P1) oder Pumplichtanteils (P2) zur individuellen Verstärkung mindestens eines ausgewählten WDM-Signals mittels eines stimulierten Brillouin-Streuprozesses unabhängig von mindestens einem der nicht ausgewählten WDM-Signalen erzeugt werden kann
**gekennzeichnet durch**
• Anpassungsmittel (ADAP), welche so ausgebildet sind, dass das Pumplicht (P1, P2) zur Anpassung an die Bandbreite (FS) des zu verstärkenden WDM-Signals (S1, S1') mit einem digitalen Pseudozufallssignat moduliert wird, welches gegenüber einem zu verstärkenden WDM-Signal die gleiche Modulationsart und Modulationsgeschwindigkeit aufweist.

8. Optischer Verstärker (SSA, MSA) nach Anspruch 8, **dadurch gekennzeichnet, dass** Messmittel (MS) zur Erfassung der Intensitätswerte von WDM-Signalen und Auswertemittel zur Ermittlung eines Steuersignals zur Ansteuerung der Pumplichterzeugungsmittel (PB1, PB2) vorhanden sind, wobei das Steuersignal so ausgebildet ist, dass die Pumplichterzeugungsmittel (PB1, PB2) ein Pumplicht (P1, P2) zur Angleichung der Intensitäten der genannten WDM-Signale erzeugt.

9. Optisches Breitbandverstärkersystem (AS) zur Verstärkung, Dispersionskompensation und Intensitätsangleichung der WDM-Signale eines WDM-Übertragungssystems, mit einem optischen Verstärker (SSA, MSA) nach Anspruch 8.

10. Optisches Breitbandverstärkersystem (AS) noch Anspruch 10, **dadurch gekennzeichnet, dass** ein aktives Faserelement (DCFG) und entsprechende auf dieses Faserelement wirkende Pumplichtquellen (DFP1, DFP2, RFP, BFP) vorhanden sind.

11. WDM-Übertragungssystem mit einem optischen Verstärker (SSA, MSA) nach Anspruch 8 oder nach Anspruch 10.

## Claims

1. A method for amplifying optical wavelength division multiplex WDM signals (S1, S1') in a WDM transmission system, where pumped light (P1, P2) is launched against the transmission direction of the WDM signals (S1, S1') in an optical waveguide (OW) of the optical transmission system, where the pumped light (P1, P2) has a frequency spectrum such that at least one selected WDM signal is individually amplified independently of at least one non-selected WDM signal by a stimulated Brillouin scattering process caused by the pumped light in the optical waveguide (OW), where the pumped light (P1, P2) is generated using a narrowband pumped light source (PB1, PB2) and adapted using an adaptation process (ADAP) to the bandwidth (FS) of the WDM signal (S1, S1') being amplified, **characterized in that** this adaptation (ADAP) consists **in that** the pumped light (P1, P2) is modulated with a digital pseudo-random signal, which has the same modulation type and modulation speed as a WDM signal to be amplified.

2. A method according to Claim 1, **characterized in that** to equalize different intensities of the WDM signals (S1') the intensity of the WDM signals is measured and a corresponding pumped light (P2) is determined for selective individual amplification of the WDM signals.

3. A method according to Claim 2, **characterized in that** to determine the amplification an intensity measurement of the signal to be amplified is averaged over a significantly longer time range than the data rate of the WDM signals, so that fluctuations of intensity caused by the modulation are not considered.

4. A method according to Claim 1, **characterized in that** the pumped light (P1) is launched over a wavelength-selective coupler (CPL).

5. A method according to Claim 1, **characterized in that** a tunable pump laser is used as the pumped light source (PB1, PB2), said tunable pump laser being set within the frequency range of the WDM signal band or of a part of the WDM signal band, to any desired frequency for amplification of a selected WDM signal.

6. A method according to Claim 1, **characterized in that** the pumped light (P1, P2) is obtained by frequency conversion from the WDM signal to be amplified, and launched into the waveguide (OW) with a frequency increased by the Brillouin frequency (ΔFB).

7. Optical amplifier (SSA, MSA) for a wavelength division multiplex transmission system, with:
• Feed means (CPL) for injecting a pumped light (P1, P2) into the optical waveguide (OW) against the transmission direction of the WDM signals (S1, S1') and
• Pumped light generation means (PB1, PB2), which are developed in such a way that a pumped light (P1) or pumped light portion (P2) can be generated for individual amplification of at least one selected WDM signal by means of a stimulated Brillouin scattering process independently of at least one of the non-selected WDM signals,
**characterized by**
• Adaptation means (ADAP), which are developed such that, for adaptation to the bandwidth (FS) of the WDM signal (S1, S1') being modified, the pumped light (P1, P2) is modulated with a digital pseudo-random signal, which has the same modulation type and modulation speed as a WDM signal to be amplified.

8. Optical amplifier (SSA, MSA) according to Claim 8, **characterized in that** measuring means (MS) for capturing the intensity values of WDM signals and evaluation means for determining a control signal for activating the pumped light generation means (PB1, PB2) are present, the control signal being developed in such a way that the pumped light generation means (PB1, PB2) generate a pumped light (P1, P2) for equalizing the intensities of the said WDM signals.

9. Optical broadband amplifier system (AS) for amplification, dispersion compensation and intensity equalization of the WDM signals of a WDM transmission system, with an optical amplifier (SSA, MSA) according to Claim 8.

10. Optical broadband amplifier system (AS) according to Claim 10, **characterized in that** an active fibre element (DCFG) and corresponding pumped light sources (DFP1, DFP2, RFP, BFP) affecting this fibre element are present.

11. WDM transmission system with an optical amplifier (SSA, MSA) according to Claim 8 or according to Claim 10.

## Revendications

1. Procédé permettant d'amplifier des signaux optiques de multiplexage en longueur d'onde WDM (S1, S1') dans un système de transmission WDM, dans lequel une lumière de pompage (P1, P2) est injectée en sens inverse de la direction de transmission des signaux WDM (S1, S1') dans un guide d'ondes (OW) du système de transmission optique, la lumière de pompage (P1, P2) présentant un spectre de fréquences de telle sorte qu'au moins un signal WDM sélectionné est amplifié individuellement par un processus de diffusion de Brillouin stimulée, provoqué par la lumière de pompage, dans le guide d'ondes (OW), indépendamment d'au moins un signal WDM non sélectionné, dans lequel la lumière de pompage (P1, P2) est produite au moyen d'une source de lumière de pompage à bande étroite (PB1, PB2) et adaptée au moyen d'un processus d'adaptation (ADAP) à la largeur de bande (FS) du signal WDM à amplifier (S1, S1'), **caractérisé en ce que** cette adaptation (ADAP) consiste à moduler la lumière de pompage (P1, P2) avec un signal numérique pseudoaléatoire qui présente le même type de modulation et la même vitesse de modulation par rapport à un signal WDM à amplifier.

2. Procédé selon la revendication 1, **caractérisé en ce que** pour l'égalisation de différentes intensités des signaux WDM (S1'), on mesure l'intensité des signaux WDM et on détermine une lumière de pompage (P2) correspondante en vue d'une amplification individuelle précise des signaux WDM.

3. Procédé selon la revendication 2, **caractérisé en ce que** pour la détermination de l'amplification, une mesure d'intensité du signal à amplifier est moyennée sur une période de temps substantiellement plus grande par rapport au débit de données des signaux WDM, de sorte que les oscillations d'intensité dues à la modulation ne sont pas prises en compte.

4. Procédé selon la revendication 1, **caractérisé en ce que** l'injection de la lumière de pompage (P1) a lieu par l'intermédiaire d'un coupleur sélectif en longueur d'onde (CPL).

5. Procédé selon la revendication 1, **caractérisé en ce que** l'on utilise comme source de lumière de pompage (PB1, PB2) un laser de pompage accordable qui est accordé à l'intérieur de la gamme de fréquences de la bande de signal WDM ou d'une partie de la bande de signal WDM sur chaque fréquence souhaitée afin d'amplifier un signal WDM sélectionné.

6. Procédé selon la revendication 1, **caractérisé en ce que** la lumière de pompage (P1, P2) est obtenue par une conversion de fréquence à partir du signal WDM à amplifier et injectée dans le guide d'ondes (OW) à une fréquence augmentée de la fréquence Brillouin (ΔFB).

7. Amplificateur optique (SSA, MSA) pour un système de transmission à multiplexage en longueur d'onde, comprenant :
- des moyens d'introduction (CPL) pour introduire une lumière de pompage (P1, P2) dans le guide d'ondes (OW) en sens inverse de la direction de transmission des signaux WDM (S1, S1'), et
- des moyens de production de lumière de pompage (PB1, PB2), qui sont réalisés de telle sorte qu'une lumière de pompage (P1) ou une part de lumière de pompage (P2) peut être produite pour une amplification individuelle d'au moins un signal WDM sélectionné au moyen d'un processus de diffusion de Brillouin stimulée, indépendamment d'au moins l'un des signaux WDM non sélectionnés,
**caractérisé par**
- des moyens d'adaptation (ADAP) qui sont réalisés de telle sorte que la lumière de pompage (P1, P2) pour l'adaptation à la largeur de bande (FS) du signal WDM à amplifier (S1, S1') est modulée par un signal numérique pseudoaléatoire qui présente le même type de modulation et la même vitesse de modulation par rapport à un signal WDM à amplifier.

8. Amplificateur optique (SSA, MSA) selon la revendication 8, **caractérisé en ce que** des moyens de mesure (MS) pour détecter les valeurs d'intensité de signaux WDM et des moyens d'analyse pour déterminer un signal de commande pour piloter les moyens de production de lumière de pompage (PB1, PB2) sont présents, le signal de commande étant réalisé de telle sorte que les moyens de production de lumière de pompage (PB1, PB2) produisent une lumière de pompage (P1, P2) pour égaliser les intensités desdits signaux WDM.

9. Système optique d'amplificateur à bande large (AS) pour l'amplification, la compensation de dispersion et l'égalisation d'intensité des signaux WDM d'un système de transmission WDM, comprenant un amplificateur optique (SSA, MSA) selon la revendication 8.

10. Système optique d'amplificateur à bande large (AS) selon la revendication 10, **caractérisé en ce qu'**il existe un élément de fibre active (DCFG) et des sources de lumière de pompage (DFP1, DFP2, RFP, BFP) correspondantes, agissant sur cet élément de fibre.

11. Système de transmission WDM, comprenant un amplificateur optique (SSA, MSA) selon la revendication 8 ou selon la revendication 10.
